(19) Europäisches Patentamt
European Patent Office
Office européen des brevets

(11) **EP 3 800 168 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **20209106.2**

(22) Anmeldetag: **24.08.2017**

(51) Internationale Patentklassifikation (IPC):
**C04B 26/06** (2006.01)  **C04B 26/16** (2006.01)
**C08K 3/36** (2006.01)  **E04F 13/08** (2006.01)
**E04F 13/18** (2006.01)

(52) Gemeinsame Patentklassifikation (CPC):
(C-Sets verfügbar)
**C04B 26/06; C04B 26/16; E04F 13/0885;
E04F 13/185;** C04B 2111/00646; C04B 2111/00672

(Forts.)

(54) **KLEBEMÖRTEL**

ADHESIVE GLUEING MORTAR

MORTIER ADHÉSIF DE COLLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.04.2021 Patentblatt 2021/14**

(62) Dokumentnummer(n) der früheren Anmeldung(en) nach Art. 76 EPÜ:
**17187845.7 / 3 447 037**

(73) Patentinhaber: **STO SE & Co. KGaA
79780 Stühlingen (DE)**

(72) Erfinder:
• **Nägele, Alexander
79848 Bonndorf (DE)**
• **Hitzler, Martin
78244 Gottmadingen (DE)**
• **Kohler, Eva
79777 Ühlingen-Birkendorf (DE)**

(74) Vertreter: **Gottschalk, Matthias
Gottschalk Maiwald
Patentanwalts- und Rechtsanwalts- (Schweiz) GmbH
Florastrasse 14
8008 Zürich (CH)**

(56) Entgegenhaltungen:
**EP-A1- 1 308 429     EP-A2- 0 616 985
EP-A2- 2 610 227     DE-A1- 3 338 229
DE-A1- 3 826 183     DE-A1- 4 421 970**

• **HPF THE MINERAL ENGINEERS QUARZWERKE GMBH: "PRODUKTÜBERSICHT | PRODUCT RANGE 2 Produktübersicht | Product range", 1 August 2017 (2017-08-01), XP093029350, Retrieved from the Internet <URL:https://www.quarzwerke.com/fileadmin/quarzwerke/pdf/HPF_Broschueren/HPF_Produktuebersicht.pdf> [retrieved on 20230306]**

(52) Gemeinsame Patentklassifikation (CPC): (Forts.)

C-Sets
**C04B 26/06, C04B 14/06, C04B 14/28,
C04B 14/42, C04B 20/0096, C04B 2103/0079,
C04B 2103/40, C04B 2103/50, C04B 2103/65;
C04B 26/16, C04B 14/06, C04B 14/28,
C04B 14/42, C04B 20/0096, C04B 2103/0079,
C04B 2103/40, C04B 2103/50, C04B 2103/65**

**Beschreibung**

Die Erfindung betrifft einen Klebe- und Fugenmörtel gemäß Anspruch 1.

Stand der Technik

Verblender dienen im Baubereich zur Verkleidung von Gebäudeflächen, beispielsweise Fassaden. Dabei kommen Flachverblender, Eckverblender und dgl. zum Einsatz, die üblicherweise wenigstes ein organisches Bindemittel und wenigstens einen, meist mehrere anorganische (mineralische) Füllstoffe und Pigmente enthalten. Die Verblender werden mittels Klebern, insbesondere Klebe- und Fugenmörteln, mit der Gebäudefläche verklebt, und können im Innen- wie auch Aussenbereich eingesetzt werden.

Verblender sollen eine gewisse Elastizität mit einer geringen Neigung zur Rissbildung verbinden. Auch soll ihre Wasseraufnahme möglichst gering sein.

Aus DE 3429429 A1 sind Verblender bekannt, die aus einem polymeren Bindemittel, Wasserglas, mineralischem Füllstoff und Pigment aufgebaut sind. Diese Verblender enthalten zusätzlich eine Silikonemulsion und eine Paraffin-Dispersion.

DE 3336743 A1 offenbart kunststoffbasierte Zusammensetzungen für Verblender, die zwecks Erhöhung der Dauerelastizität mit Chlorparaffin als Weichmacher ausgestattet werden.

Andere Zusammensetzungen auf Polymerbasis sind in DE 3045747 A1 und DE 3831123 A1 offenbart.

Die bekannten Verblender sind jedoch nicht ausreichend und/oder nicht dauerhaft elastisch. Die Elastizität beruht wesentlich auf dem jeweils verwendeten Weichmachersystem. Jedoch sind die Weichmacher dieser Verblender nicht dauerhaft, weil sie durch Verdampfung, Migration, Auswaschung bzw. Zerfall (unter dem Einfluss von Witterung, UV-Licht und dgl.) verlorengehen, was die Dauerelastizität verringert oder sogar ganz zerstört.

Zudem sind solche Weichmachersysteme oft gesundheitlich bzw. ökologisch bedenklich. Beispielsweise stehen die in DE3045747 genannten Phthalate im Verdacht, gesundheitsschädigend zu sein.

In vielen Ländern ist der Einsatz organischer Weichmacher gesetzlich reglementiert. Ferner sollte in den Niederlanden eine Zusammensetzung für Verblender mineralölfrei nach NEN 6978-2016 sein.

Es ist daher wünschenswert, Zusammensetzungen und daraus herstellbare Verblender der genannten Art zur Verfügung zu haben, die diese Nachteile nicht aufweist. Diese Zusammensetzungen und daraus herstellbare Verblender selbst sind nicht Teil der hier beanspruchten Erfindung.

Die zur Anbringung der Verblender verwendeten Kleber unterliegen entsprechenden Vorschriften und Einschränkungen. Ein Klebe- und Fugenmörtel ist beispielsweise aus DE4421970 bekannt.

Da der Bindemittelgehalt im Verblender bzw. Kleber zur Brandlast beiträgt, soll die verbesserte Dauerelastizität nicht durch einen erhöhten Bindemittelgehalt erreicht werden. Vielmehr soll der Bindemittelgehalt möglichst niedrig gehalten werden.

Wichtige Aufgaben der Erfindung betreffen die Bereitstellung eines passenden, mit den Verblendern möglichst kompatiblen Klebers Weitere Aufgaben und Vorteile der Erfindung ergeben sich aus der beigefügten Beschreibung bevorzugter Ausführungsformen der Erfindung.

Der erfindungsgemäße Kleber weist zur Lösung der Aufgaben die in Patentanspruch 1 angegebene Merkmalskombination auf Vorteilhafte Ausgestaltungen sind in den jeweiligen Unteransprüchen angegeben. Grundsätzlich löst die Erfindung die genannten Aufgaben durch den Einsatz wenigstens eines "mechanischen" Weichmachers, der auf einer optimierten mineralischen Füllstoff-Kombination beruht.

Diese Füllstoff-Kombination umfasst einerseits einen Anteil an wenigstens einem Grobfüllstoff (GF). Ein GF im Sinne der Erfindung hat eine mittlere d50 Teilchengröße von mehr als 100 $\mu$m. Die Füllstoff-Kombination umfasst andererseits einen Anteil an wenigstens einem Feinfüllstoff (FF). Ein FF im Sinne der Erfindung hat eine mittlere d50 Teilchengröße von maximal 100 $\mu$m.

Der GF-Anteil erleichtert die Durchtrocknung und Aushärtung der Verblender, die typisch einige Millimeter dick sind. Zudem verbessert der GF-Anteil mechanische Eigenschaften wie Festigkeit und Stabilität, ähnlich wie der Zuschlag von Schotter, Kies und Sand bei Beton. Da der GF-Anteil aus kostengünstigen Materialien wie Sand und anderen körnigen Materialien bestehen kann, werden die Kosten insgesamt verringert.

Der FF-Anteil trägt wesentlich zu der "mechanischen" Elastizität der Verblender bei. Diese Füllstoffe sind mineralisch und werden daher weder ausgewaschen, noch verflüchtigen sie sich. Sie werden auch nicht photolytisch abgebaut oder dgl.

Daher sind die Verblender dauerhaft elastisch. Entsprechendes gilt für die erfindungsgemäßen Klebe- und Fugenmörtel.

Detaillierte Offenbarung der Erfindung

Die zur Herstellung von dauerelastischen Verblendern sowie Klebe- und Fugenmörteln vorgeschlagene Zusammensetzung umfasst mindestens ein organisches Bindemittel sowie mindestens einen Grob- und mindestens einen Feinfüllstoff-Anteil.

Ein nützlicher Parameter zur Definition der Feinfüllstoff-Anteile der erfindungsgemäßen Produkte ist die Ölzahl (ÖZ) dieser Komponenten.

Die Ölzahl bzw. ihre Ermittlung ist in der DIN EN ISO 787-5 definiert. Demnach entspricht die Ölzahl der Menge Lackleinöl, die zur vollständigen Benetzung einer Füllstoffprobe unter vorgegebenen Bedingungen erforderlich ist. Füllstoffpartikel mit einem ungünstigen Oberflächen/Volumenverhältnis und/oder einer strukturierten oder porösen Oberfläche haben dementsprechend eine höhere Ölzahl.

Die Ölzahl eines Füllstoffs korreliert mit dem Bedarf an Bindemittel, das zur Herstellung eines den Füllstoff umfassenden Verblenders erforderlich ist. Je höher die Ölzahl ist, umso mehr Bindemittel wird benötigt, um die Füllstoff-Partikel zu benetzen und einzuhüllen. Erfindungsgemäss wird daher ein Feinfüllstoffanteil mit einer durchschnittlichen Ölzahl nach DIN EN ISO 787-5 von weniger als 40 g/100 g eingesetzt.

Die Ölzahl ist insbesondere abhängig vom Oberflächen/Volumenverhältnis und der Morphologie der Füllstoffpartikel. Hierbei spielen die Form und die Größe der Partikel eine Rolle. Während sich kompakte, runde Formen günstig auf eine niedrige Ölzahl auswirken, führen plättchen- oder stabförmige Füllstoffpartikel zu einer Erhöhung der Ölzahl. Plättchenform weisen beispielsweise die Partikel des vergleichsweise preiswerten Füllstoffs Talkum auf, bei dem es sich um ein Schichtsilikat handelt. Man wird also vorzugsweise Feinfüllstoffe mit kompakter, runder Teilchenform verwenden, um weniger Bindemittel einsetzen zu müssen.

Ferner hat die Oberflächenbeschaffenheit der Füllstoffpartikel Einfluss auf die Ölzahl. Eine strukturierte und/oder poröse Oberfläche führt beispielsweise zu einer Erhöhung der Ölzahl. In Abhängigkeit von der Herstellung, Aufbereitung und/oder Herkunft eines Füllstoffs kann demnach die Ölzahl sehr unterschiedlich sein. Im Umkehrschluss gilt, dass wenn man Füllstoffe mit möglichst geringer Ölzahl einsetzt, diese Partikel ein gutes Oberfläche/Volumenverhältnis haben bzw. relativ "kugelförmig" sind (solange keine porösen Füllstoffe eingesetzt werden.) Wenn alle Füllstoff-Partikel relativ kugelförmig sind, können sie dichter gepackt werden. Werden nun relativ kugelförmige Füllstoff-Partikel unterschiedlicher Größe eingesetzt, dann kann die Dichte der Kugelpackung weiter erhöht werden. Die kleineren Partikel sitzen dann in den Lücken zwischen den größeren Partikeln. Der Festkörpergehalt wird so optimiert.

Überraschenderweise erhöht sich dadurch auch die Elastizität des Materials. Die Erfindung macht sich diesen Effekt zunutze, um dauerelastische Verblender und Kleber zu schaffen, die ohne organische Weichmacher und paraffinische Komponenten und mit geringen Bindemittelgehalten auskommen.

Vorzugsweise weist bei hier offenbarten Zusammensetzungen der Feinfüllstoffanteil eine Ölzahl nach DIN EN ISO 787-5 auf, die < 34 g/100 g, weiterhin vorzugsweise < 28 g/100 g ist.

Die Zusammensetzung enthält vorzugsweise im Wesentlichen keine organischen Weichmacher und vorzugsweise auch keine paraffinischen Bestandteile. "Im Wesentlichen" bedeutet hier Gehalte von max. 10 Gew. %, vorzugsweise von max.

5 Gew. %, mehr bevorzugt von 2 oder sogar nur 1 Gew. %. Besonders bevorzugt enthält die Zusammensetzung innerhalb üblicher analytischer Nachweisgrenzen keine organischen Weichmacher und keine paraffinischen Bestandteile.

Bildlich kann man sich vorstellen, dass der Grobfüllstoff eine möglichst dichte Kugelpackung bildet und in deren Lücken sich die Feinfüllstoffe einlagern. Dadurch wird der Raum "voll ausgefüllt". Je feiner der FF-Anteil (d.h. je kleiner der d50 der FF) ist, desto besser können sich die FF in die Lücken der GF einlagern. Zwar steigt grundsätzlich mit dem Gehalt an feinen (kleinteiligen) FF-Partikeln auch die Ölzahl des FF-Anteils und damit der Bindemittelbedarf. Jedoch lässt sich dieser Anstieg bei Verwendung kompakter, runder Partikel verringern.

Das Mengenverhältnis nach Gewichtsanteilen des Feinfüllstoff-Anteils zum Grobfüllstoff-Anteil ist vorzugsweise > 0.2, vorzugsweise > 0.25, weiterhin vorzugsweise > 0.3. Dadurch ist sichergestellt, dass genug Feinfüllstoff vorhanden ist, um die Lücken zwischen den Grobfüllstoff-Partikeln zu füllen und damit die "mechanische" Weichmacherwirkung zu gewährleisten, die den Verzicht auf organische Weichmacher ermöglicht.

Der durchschnittliche d50 des FF-Anteils liegt bei 2 bis 100 $\mu$m, besser 3 bis 90 $\mu$m.

Der durchschnittliche d50 des GF-Anteils liegt bei 101 bis 2000 $\mu$m, besser 150 bis 1600 $\mu$m, noch besser 200 bis 1200 $\mu$m.

Das Größenverhältnis des durchschnittlichen d50 des FF-Anteils zum durchschnittlichen d50 des GF-Anteils sollte kleiner 0,5, bevorzugter kleiner 0,3, noch bevorzugter kleiner 0,2 sein, damit die FF gut in die Lücken zwischen den GF - Partikeln passen.

Das Mengenverhältnis (bezogen auf Gewicht) des FF-Anteils zum GF-Anteil sollte größer 0,2, bevorzugter größer 0,25, noch bevorzugter größer 0,3 sein. Es sollte dabei deutlich mehr GF als FF vorhanden sein. Ein größerer GF-Anteil beschleunigt die Durchtrocknung und verringert den Bindemittelbedarf. Zudem verringert ein größerer GF-Anteil die Kosten.

Soweit in der vorliegenden Anmeldung die Füllstoffe anhand ihrer mittleren Partikelgröße charakterisiert werden, erfolgt dies durch Bestimmung der Partikelgrößenverteilung. Der Wert dx bedeutet hierbei den prozentualen Anteil "x" der Partikel, die einen Durchmesser kleiner als "d" haben. Dies bedeutet, dass der d20-Wert den Partikeldurchmesser darstellt, bei dem 20 Vol. % aller Partikel kleiner sind. Der d50-Wert ist folglich der volumenmittlere Medianwert, d. h. 50% Vol.-% aller Partikel sind kleiner als diese Partikelgröße. Vorliegend ist die Partikelgröße als volumenmittlerer Medianwert d50 angegeben. Um den volumenmittleren Medianwert d50 zu ermitteln, wurde ein Laserbeugungs-Partikelgrößenbestimmungsinstrument Mastersizer 3000 von der Firma Malvern Instruments Limited, U. K. verwendet. Die Methode und das Instrument sind dem Fachmann bekannt und werden routinemäßig eingesetzt, um Partikelgrößen zu bestimmen. Die Messung wird in Wasser durchgeführt. Die Probe wird mittels Hochgeschwindigkeitsrührer und Ultraschall dispergiert. Viele Rohstoff-Lieferanten geben den d50-Wert routinemäßig im technischen Datenblatt an.

Die enthaltenen Füllstoffe sind vorzugsweise anorganischer bzw. mineralischer Natur. Insbesondere können Silizium-Aluminium-Mischoxide, Carbonate, insbesondere Erdalkalicarbonate, wie beispielsweise Calciumcarbonat, Siliziumdioxide, wie beispielsweise Quarz, Silikate, insbesondere Alumino- oder Erdalkalisilikate, Zement, beispielsweise Portlandzement oder Calciumaluminatzement, Sulfate, wie beispielsweise Bariumsulfat, Oxide, wie beispielsweise Titandioxid, Hydroxide, wie beispielsweise Aluminiumhydroxid, und/oder Buntpigmente, insbesondere Eisenoxide, Bismutvanadate, als Füllstoff bzw. Füllstoffe enthalten sein. Anorganische bzw. mineralische Füllstoffe sind nicht brennbar und weisen in der Regel eine hohe mechanische und chemische Stabilität auf. Ferner liegen die vorstehend genannten Füllstoffe in der Regel als Sande und/oder Mehle vor, die vorrangig runde Partikelformen aufweisen, was zu einem günstigen Oberflächen/Volumenverhältnis führt.

Der Feinfüllstoff-Anteil besteht vorzugsweise zu mindestens 60 Gew. %, vorzugsweise zu mindestens 65 Gew. % und besonders bevorzugt zu mindestens 70 Gew. % aus Mineralen mit einer Mohs-Härte von höchstens 4, vorzugsweise höchstens 3,5 und besonders bevorzugt höchstens 3.

Der Grobfüllstoff Anteil besteht vorzugsweise zu mindestens 60 Gew. %, vorzugsweise zu mindestens 65 Gew. % und besonders bevorzugt zu mindestens 70 Gew. % aus Mineralen mit einer Mohs-Härte von mindestens 5, vorzugsweise mindestens 6 und besonders bevorzugt mindestens 7.

Der Gesamtfüllstoffanteil beträgt bevorzugt 40 bis 99 Gew. %, vorzugsweise 45 bis 98 Gew. %, weiterhin vorzugsweise 55 bis 97 Gew. % bezogen auf das Gesamtgewicht der Ausgangsstoffe.

Der hohe Füllstoffanteil bzw. Festkörpergehalt der erfindungsgemäßen Füllstoffkombination geht nicht zu Lasten der Verarbeitbarkeit der erfindungsgemäßen Zusammensetzung. Überraschenderweise wurde ferner festgestellt, dass ein hoher Festkörpergehalt der erfindungsgemäßen Füllstoffkombination nicht zum Verlust der Elastizität eines hieraus hergestellten Verblenders bzw. Mörtels führt, sondern die Elastizität, insbesondere die Dauerelastizität, steigert. Die Erfindung ermöglicht daher eine hohe Elastizität bei geringem Bindemittelgehalt, weil der Bindemittelbedarf wegen der niedrigen Ölzahl des FF-Anteils relativ gering ist.

Weiterhin bevorzugt ist bzw. sind das in der Zusammensetzung enthaltene organische Bindemittel eine wässrige Polymerdispersion und/oder ein Dispersionspulver auf Basis von Acrylat, Styrolacrylat, Vinylacetat, Vinylacetat-Ethylen, Vinylchlorid und/oder Polyurethan. Als organische Bindemittel können insbesondere Homopolymere, Copolymere oder Terpolymere von Acrylsäure und/oder Methacrylsäure, Itaconsäuresowie Säurestern wie Ethylacrylat, Butylacrylat, Styrol, substituiertes oder unsubstituiertes Vinylchlorid, Vinylacetat, Ethylenvinylacetat, Acrylamide und Acrylonitril; wasserverdünnbare Alkydpolymere, Kombinationen von (Meth)Acryl/Alkyd-polymeren, Polyvinylalkohol sowie deren Mischungen eingesetzt werden. Acrylat-Dispersionen und ethylenhaltige Bindemittel werden bevorzugt.

Das organische Bindemittel kann beispielsweise als wasser- und lösemittelfreies Re-Dispersionspulver eingesetzt werden oder als wässrige und/oder lösemittelhaltige Polymerdispersion. Üblicherweise wird eine wässrige und/oder lösemittelhaltige Polymerdispersion verwendet. Die nichtwässrigen Lösemittel sind üblicherweise organische Lösemittel. Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Das organische Bindemittel enthält üblicherweise mindestens 60 Gew. % Kohlenstoff bezogen auf das Gesamtgewicht des Bindemittels. Derartige Bindemittel sind normalerweise aus organischen Monomeren aufgebaut, wie beispielsweise Monomeren enthaltend C-C-Doppelbindungen, Monomere die mittels Kondensation oder Additionsreaktionen polymerisiert werden können. Geeignete Bindemittel bzw. Bindemittelpolymere sind solche auf Basis der Monomere Carbonsäurevinylester mit 3 bis 20 C-Atomen, beispielsweise Vinylacetat und Vinylpropionat, N - Vinylpyrrolidon und dessen Derivate, Vinylaromaten, beispielsweise Styrol und Derivate von Vinylaromaten, wie beispielsweise Derivate von Styrol, Vinylhalogeniden, ethylenisch ungesättigten Carbonsäuren, beispielsweise Acryl- und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden, Säureestern wie Acrylamide und Acrylonitril, Polyurethane, vorzugsweise in Form von Polymerdispersionen wie oben erläutert. Wasserverdünnbare Alkydpolymere, Kombinationen von (Meth)Acryl/Alkydpolymeren, Polyvinylalkohol und deren Mischungen können ebenfalls eingesetzt werden. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestern ((Meth)acrylaten) bzw. deren Mischungen handeln. Unter dem Begriff (Meth)acrylat bzw. (Meth)acrylsäure werden in der vorliegenden Erfindung sowohl Methacrylate bzw. Methacrylsäure als auch Arylate bzw. Acrylsäure bzw. deren jeweilige Mischungen bezeichnet. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure. Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet.

Beispielhaft seien als geeignete Alkylester der Acrylsäure und der Methacrylsäure Methylacrylat, Ethylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, isoButylmethacrylat, 2-Ethylhexylmethacrylat, Cyclohexylmethacrylat und Cyclohexylacrylat ge.nannt. Diese Alkylester können selbstverständlich sowohl alleine als auch in Form einer Kombination von zwei oder mehreren Alkylestern verwendet werden. Zusätzlich oder anstelle können auch mit funktionellen Gruppen, beispielsweise mit Hydroxyl- oder mit Epoxygruppen funktionalisierte Alkylester der Acrylsäure und/oder der Methacrylsäure eingesetzt werden. Geeignete hydroxygruppenhaltige (Meth)acrylsäureester umfassen Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester können sowohl alleine als auch in Kombination eingesetzt werden. Als epoxygruppenhaltige (Meth)acrylsäureester sei exemplarisch auf Glycidylmethacrylat und Glycidylacrylat verwiesen.

Zusätzlich können als Comonomere zu der Acrylsäure, der Methacrylsäure und/oder den Estern, insbesondere Alkylestern, der (Meth)acrylsäure weitere ungesättigte Monocarbonsäuren sowie deren Anhydride und/oder insbesondere ungesättigte Dicarbonsäuren eingesetzt werden. Als geeignete ungesättigte Dicarbonsäuren kommen zum Beispiel Maleinsäure, Fumarsäure, Itaconsäure und Citraconsäure sowie deren Halbester, beispielsweise mit C 1-C 12-Alkoholen in Betracht. Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden.

Der Anteil des organischen Bindemittels beträgt bevorzugt 1 bis 20 Gew. %, vorzugsweise 1 bis 15 Gew. %, weiterhin vorzugsweise 2 bis 10 Gew. % bezogen auf das Gesamtgewicht der Ausgangsstoffe.

Zur Optimierung der Verarbeitbarkeit kann die Zusammensetzung mindestens ein Additiv enthalten. Insbesondere kann bzw. können Filmbildner, Entschäumer, Hydrophobierungsmittel, Verdickungsmittel, Netzmittel, Dispergiermittel, Konservierungsmittel Flammschutzmittel und/oder Fasern enthalten sein. Bevorzugt sind nicht mehr als 10 Gew. % Additive bezogen auf das Gesamtgewicht der Ausgangsstoffe der Zusammensetzung enthalten.

Vorzugsweise enthält eine verarbeitungsfertige Zusammensetzung für Verblender:

1 - 20 Gew. % organisches Bindemittel (Feststoff), bvzgt. 1 - 15 Gew %, bvzgter 2 - 10 Gew. %
30 - 80 Gew. % Grobfüllstoffe, bvzgt. 40 - 75 Gew. %, bvzgter 50 - 75 Gew. %
10 - 50 Gew. % Feinfüllstoffe, bvzgt. 15 - 45 Gew. %, bvzgter 20 - 40 Gew. %
0,1 - 10 Gew. % Additive, bvzgt. 0,2 - 8 Gew. %, bvzgter 0,5 - 6 Gew. %
5 - 30 Gew. % Wasser

Die Vorteile werden nachfolgend anhand eines Beispiels für Flachverblender beschrieben:

Beispiel (Flachverblender)

| | |
|---|---|
| Wasser | 5 Gew. % |
| Wässrige Polymerdispersion (50 % Feststoffgehalt) | 10 Gew. % |
| Silikatische und/oder carbonatische Grobfüllstoffe (0,1 - 1,0 mm Korn) | 60 Gew. % |
| Carbonatische und/oder hydroxidische Feinfüllstoffe (ÖZ = 22) | 20 Gew. % |
| Additive (insb. Rheologie-Additive, Hydrophobierungsmittel, Entschäumer, Filmbildehilfsmittel, Fasern, Dispergiermittel, Konservierungsmittel, Farbmittel, etc.) | 5 Gew. % |

ÖZ in [g/100g]

Die Gesamt-Ölzahl des FF-Anteils beträgt **22** und wird folgendermaßen berechnet: Im FF-Anteil der Zusammensetzung sind **100 Gew. %** Füllstoffe mit ÖZ = 22 enthalten (bezogen auf den Feinfüllstoff-Anteil).

$$\Rightarrow (1{,}0 * 22) = 22$$

Die beispielsgemäße Zusammensetzung wird in Formen gegeben und bei erhöhter Temperatur getrocknet. Nach ausreichender Durchtrocknung/Durchhärtung wird entformt und gelagert. Die Dicken der Flachverblender können variieren von 1 bis 16 mm, bevorzugter 2 bis 14 mm, noch bevorzugter 3 bis 12 mm.
Die so erzeugten Flachverblender (mit einer Trockenschichtstärke /Dicke von 3,0 mm) wurden auf ihre Elastizität bzw. Zugdehnung (oder auch Rissdehnung) untersucht:
Dabei wurde die Zugdehnung als Maß der Elastizität nach ETAG 004 mit einer Zwick UPM Typ 1486 SNA 250 am "freien Film" bestimmt. Die Zugdehnung betrug 5.8%.
Die Wasseraufnahme nach DIN 1602-3 betrug 0,046 Kg/(m$^2$* $\sqrt{}$ h).

Referenzbeispiel (Flachverblender)

| | |
|---|---|
| Wasser | 5 Gew. % |
| Wässrige Polymerdispersion (50 % Feststoffgehalt) | 10 Gew. % |
| Silikatische und/oder carbonatische Grobfüllstoffe (0,1 - 1,0 mm Korn) | 60 Gew. % |
| Schichtsilikate wie Al-Silikathydrat und/oder Mg-Silikathydrat als Feinfüllstoffe (ÖZ = 60) | 20 Gew. % |
| Additive (insb. Rheologie-Additive, Hydrophobierungsmittel, Entschäumer, Filmbildehilfsmittel, Fasern, Dispergiermittel, Konservierungsmittel, Farbmittel, etc.) | 5 Gew. % |

ÖZ in [g/100g]

Die Gesamt-Ölzahl des FF-Anteils beträgt **60.**
Proben der Flachverblender wurden wie beim ersten Beispiel hergestellt.
Ferner wurde die Zugdehnung als Maß der Elastizität nach ETAG 004 mit einer Zwick UPM Typ 1486 SNA 250 am "freien Film" bestimmt. Die Zugdehnung betrug lediglich 0,8%.
Die Wasseraufnahme nach DIN 1602-3 betrug 0,103 Kg/(m$^2$* V h).
Die erfindungsgemässen Klebe- und Fugenmörtel eignen sich besonders zur Verarbeitung zusammen mit den erfindungsgemäßen Verblendern, schon, weil sie eine ähnliche Elastizität aufweisen. Sie zeigen eine relativ sehr geringe Wasseraufnahme.
Sie unterscheiden sich vorzugsweise von den Verblendern durch eine etwas andere Zusammensetzung. Das Prinzip ist wie bei den Verblendern: Füllstoff-Kombination umfassend einen Feinfüllstoff- und einen Grobfüllstoff Anteil. Jedoch ist vorzugsweise der FF-Anteil etwas höher und feiner:

- das Gewichtverhältnis des FF-Anteils zum GF-Anteil ist vorzugsweise größer 0,5 bevorzugter größer 0,6, noch bevorzugter größer 0,8;

- das Größenverhältnis des durchschnittlichen d50 des FF-Anteils zum durchschnittlichen d50 des GF-Anteils ist vorzugsweise kleiner 0,3, bevorzugter kleiner 0,2, noch bevorzugter kleiner 0,1;

- die durchschnittliche Ölzahl des FF-Anteils ist kleiner 35 g/100g, bevorzugter kleiner 30 g/100g, noch bevorzugter kleiner 25 g/100g.

Im Übrigen entsprechen die Zusammensetzungen denen für Verblender.

Ausführungsbeispiel (Klebe- und Fugenmörtel)

| | |
|---|---|
| Wasser | 5 Gew. % |
| Wässrige Polymerdispersion (50 % Feststoffgehalt) | 10 Gew. % |
| Silikatische und/oder carbonatische Grobfüllstoffe (0,1 - 0,8 mm Korn) | 42 Gew. % |
| Carbonatische Feinfüllstoffe (ÖZ = 15) | 12 Gew. % |
| Hydroxidische Feinfüllstoffe (ÖZ = 25) | 18 Gew. % |
| Silikatische Feinfüllstoffe (ÖZ = 20) | 8 Gew. % |
| Additive (insb. Rheologie-Additive, Hydrophobierungsmittel, Entschäumer, Filmbildehilfsmittel, Fasern, Dispergiermittel, Konservierungsmittel, etc.) | 5 Gew. % |

ÖZ in [g/100g]

Die Gesamt-Ölzahl beträgt **20,8** und wird folgendermaßen berechnet:

Im FF-Anteil der Zusammensetzung sind 31,6 Gew. % Feinfüllstoffe mit ÖZ = 15 enthalten (bezogen auf den Feinfüllstoff-Anteil); 21,0 Gew. % Füllstoffe mit ÖZ = 20 und 47,4 Gew. % Füllstoffe mit ÖZ = 25.

$\Rightarrow$

$$\Rightarrow (0{,}316 * 15) + (0{,}210 * 20) + (0{,}474 * 25) = 20{,}8$$

Auch dieser Klebe- und Fugenmörtel zeichnet sich aus durch eine hohe Elastizität und geringe Wasseraufnahme.

Die Probenzubereitung erfolgte wie oben schon beschrieben.

Dabei wurde die Zugdehnung als Maß der Elastizität nach ETAG 004 mit einer Zwick UPM Typ 1486 SNA 250 am "freien Film" bestimmt. Die Zugdehnung betrug 2,0%.

Die Wasseraufnahme nach DIN 1602-3 betrug 0,014 Kg/(m$^2$* V h).

Referenzbeispiel (Klebe- und Fugenmörtel)

| | |
|---|---|
| Wasser | 5 Gew. % |
| Wässrige Polymerdispersion (50 % Feststoffgehalt) | 10 Gew. % |
| Silikatische und/oder carbonatische Grobfüllstoffe (0,1 - 0,8 mm Korn) | 42 Gew. % |
| Schichtsilikat als Feinfüllstoff (ÖZ = 50) | 38 Gew. % |
| Additive (insb. Rheologie-Additive, Hydrophobierungsmittel, Entschäumer, Filmbildehilfsmittel, Fasern, Dispergiermittel, Konservierungsmittel, etc.) | 5 Gew. % |

ÖZ in [g/100g]

Die Gesamt-Ölzahl des FF-Anteils beträgt **50.**

Die Probenzubereitung erfolgte wie oben schon beschrieben.

Dabei wurde die Zugdehnung als Maß der Elastizität nach ETAG 004 mit einer Zwick UPM Typ 1486 SNA 250 am "freien Film" bestimmt. Die Zugdehnung betrug lediglich 0,9%.

Die Wasseraufnahme nach DIN 1602-3 betrug 0,112 Kg/(m$^2$* V h).

**Patentansprüche**

1.    Klebe- und Fugenmörtel, umfassend mindestens eine Polymerdispersion als organisches Bindemittel und eine Füllstoff-Kombination, welche einerseits einen Grobfüllstoff-Anteil mit einer, mittels Laserbeugungs-Partikelgrößenbestimmung bestimmten, mittleren d50 Teilchengrösse von oberhalb 100 $\mu$m und andererseits einen Feinfüllstoff-Anteil mit einer mittleren d50 Teilchengrösse von maximal 100 $\mu$m und einer durchschnittlichen Ölzahl nach DIN EN ISO 787-5 von weniger als 35 g/100 g umfasst.

2.    Klebe- und Fugenmörtel nach Anspruch 1,

bei dem die durchschnittliche Ölzahl nach DIN EN ISO 787-5 des Feinfüllstoff-Anteils < 30 g/100g und besonders bevorzugt < 25 g/100 g beträgt.

3. Klebe- und Fugenmörtel nach Anspruch 1 oder Anspruch 2, bei dem das Mengenverhältnis nach Gewichtsanteilen des Feinfüllstoff-Anteils zum Grobfüllstoff Anteil > 0,5, vorzugsweise > 0,6 und besonders bevorzugt > 0,8 ist.

4. Klebe- und Fugenmörtel nach einem der vorstehenden Ansprüche, bei dem das Grössenverhältnis der mittleren d50 Teilchengrösse des Feinfüllstoff-Anteils zur mittleren d50 Teilchengrösse des Grobfüllstoff -Anteils < 0,3, vorzugsweise < 0,2, besonders bevorzugt < 0,1 ist.

**Claims**

1. An adhesive mortar and jointing mortar, comprising at least one polymer dispersion as an organic binding agent and a filler material combination which on the one hand comprises a proportion of coarse filler material with a d50 mean particle size of over 100 $\mu$m, determined by means of laser diffraction particle size determination, and on the other hand comprises a proportion of fine filler material with a maximum d50 mean particle size of 100 $\mu$m and an average oil absorption value according to DIN EN ISO 787-5 of less than 35 g/100 g.

2. The adhesive mortar and jointing mortar as claimed in claim 1, in which the average oil absorption value according to DIN EN ISO 787-5 of the proportion of fine filler material is < 30 g/100 g and particularly preferably < 25 g/100 g.

3. The adhesive mortar and jointing mortar as claimed in claim 1 or claim 2, in which the quantitative proportion by weight of the proportion of fine filler material with respect to the proportion of coarse filler material is > 0.5, preferably > 0.6 and particularly preferably > 0.8.

4. The adhesive mortar and jointing mortar as claimed in one of the preceding claims, in which the size ratio of the d50 mean particle size of the proportion of fine filler material with respect to the d50 mean particle size of the proportion of coarse filler material is < 0.3, preferably < 0.2, particularly preferably < 0.1.

**Revendications**

1. Mortier colle et de rejointement, comprenant au moins une dispersion de polymères en tant qu'agent liant organique et une association d'agents de charge, laquelle comprend d'une part une proportion d'agent de charge grossier, d'une taille moyenne de particules d50, déterminée au moyen d'une détermination de la taille des particules par diffraction laser de plus de 100 $\mu$m et d'autre part une proportion d'agent de charge fin, d'une taille moyenne de particules d'au maximum 100 $\mu$m et d'une valeur moyenne d'absorption d'huile selon la norme DIN EN ISO 787-5 de moins de 35 g/100 g.

2. Mortier colle et de rejointement selon la revendication 1, pour lequel la valeur moyenne d'absorption d'huile selon la norme DIN EN ISO 787-5 de la proportion d'agent de charge fin est < 30 g / l00g et de manière particulièrement préférentielle, est < 25 g/100 g.

3. Mortier colle et de rejointement selon la revendication 1 ou la revendication 2, pour lequel le rapport quantitatif en proportions en poids de la proportion d'agent de charge fin à la proportion d'agent de charge grossier est > 0,5, de préférence est > 0,6 et de manière particulièrement préférentielle, est > 0,8.

4. Mortier colle et de rejointement selon l'une quelconque des revendications précédentes, pour lequel le rapport en taille de la taille moyenne des particules d50 de la proportion d'agent de charge fin à la taille moyenne des particules d50 de la proportion d'agent de charge grossier est < 0,3, de préférence < 0,2, de manière particulièrement préférentielle est < 0,1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3429429 A1
- DE 3336743 A1
- DE 3045747 A1
- DE 3831123 A1
- DE 3045747
- DE 4421970